# EUROPEAN PATENT APPLICATION

(11) **EP 2 605 320 A1**
(43) Date of publication of application: **19.06.2013**
(21) Application number: 12764213.0
(22) Date of filing: 27.03.2012
(51) Int. Cl.: H01M 8/04, H01M 8/10

(54) **FUEL CELL SYSTEM AND OPERATING METHOD FOR SAME**

(30) Priority: 31.03.2011 JP 2011077636
(71) Applicant: Panasonic Corporation, Kadoma-shi, Osaka 571-8501 (JP)
(72) Inventor: NAKAMURA, Akinari, Osaka 540-6207 (JP); KOKUBU, Hirofumi, Osaka 540-6207 (JP); URATA, Takayuki, Osaka 540-6207 (JP); TANAKA, Yoshikazu, Osaka 540-6207 (JP)
(74) Representative: Grünecker, Kinkeldey, Stockmair & Schwanhäusser
(86) International application number: PCT/JP2012/002118
(87) International publication number: WO 2012/132410

(57) **Abstract**

A fuel cell system according to the present invention includes: a fuel cell (1); an accessory device; a sensor configured to detect an operation state of the fuel cell system; an accessory device abnormality detector (44) configured to detect an abnormality in the accessory device; a sensor abnormality detector (45) configured to detect an abnormality in the operation state of the fuel cell system; and a controller (47). The controller performs control such that, during normal operation of the fuel cell system, the controller continues the operation of the fuel cell system in the following cases: a case where the accessory device abnormality detector (44) has detected an abnormality and the sensor abnormality detector (45) detects no abnormality; and a case where the accessory device abnormality detector (44) detects no abnormality and the sensor abnormality detector (45) detects no abnormality, and stops the operation of the fuel cell system in the following cases: a case where the accessory device abnormality detector (44) has detected an abnormality and the sensor abnormality detector (45) has detected an abnormality; and a case where the accessory device abnormality detector (44) detects no abnormality and the sensor abnormality detector (45) has detected an abnormality.

## Description

### Technical Field

The present invention relates to a fuel cell system including a fuel cell, an accessory device, and a sensor, and to a method of operating the fuel cell system.

### Background Art

In recent years, wide demands are expected to arise for fuel cell systems which are household power generation systems using a fuel cell. Also, technological development has been conducted in various aspects, aiming to spread and put in practical use such household fuel cell systems.

Fuel cell systems include: a large number of accessory devices such as valves, fans, pumps, and heaters; and sensors such as a flow rate sensor, a temperature sensor, and a water level sensor. Such a fuel cell system is configured to use these accessory devices and sensors to detect whether the fuel cell system is in normal operation, and if there is an abnormality, stop the operation of the fuel cell system or prohibit start-up of the fuel cell system.

For example, as in a fuel cell system disclosed in Patent Literature 1 indicated below, there is a known technique with which to determine by a pressure sensor of the fuel cell system whether a pressure value is normal and to determine whether the rotational frequency of a hydrogen pump is normal, and if any abnormality is detected in the determinations, prohibit start-up of the fuel cell system (see Fig. 3 of Patent Literature 1, for example)

### Citation List

### Patent Literature

PTL 1: Japanese Laid-Open Patent Application Publication No. 2008-204957

### Summary of Invention

### Technical Problem

However, in the above conventional technique, the start-up of the fuel cell system is prohibited if there is at least one abnormality in the pressure value of the pressure sensor and the rotational frequency of the hydrogen pump. Therefore, there is a risk that the start-up is prohibited an excessive number of times. Thus, there is still room for improvements from the standpoint of extending an operating time of the fuel cell system to operate the fuel cell system efficiently. To be specific, in the above conventional technique, the start-up of the fuel cell system is prohibited even in a case, for example, where an accessory device such as a pump temporarily malfunctions due to disturbance such as noise, wind, or dust, but later returns to a normal operating state. Accordingly, there is a risk that the start-up is prohibited excessively frequently.

The present invention has been made in view of the above-described problems of conventional art. An object of the present invention is to provide a fuel cell system configured to reduce the frequency of operation stops of the system due to abnormalities in accessory devices, thereby continuing the operation and thus realizing improved usability of the fuel cell system for the user.

### Solution to Problem

In order to solve the above-described conventional problems, a fuel cell system according to the present invention including a fuel cell configured to generate electric power by using a fuel gas and an oxidizing gas includes: an accessory device which is at least one of an actuator and a heater, the actuator being configured to control a fluid relating to operation of the fuel cell system; a sensor configured to detect an operation state of the fuel cell system; an accessory device abnormality detector configured to detect an abnormality in the accessory device; a sensor abnormality detector configured to detect an abnormality in the operation state of the fuel cell system based on an output value from the sensor; and a controller configured to control the operation of the fuel cell system. The controller performs control such that, during normal operation of the fuel cell system, the controller continues the operation of the fuel cell system in the following cases: a case where the accessory device abnormality detector has detected an abnormality and the sensor abnormality detector detects no abnormality; and a case where the accessory device abnormality detector detects no abnormality and the sensor abnormality detector detects no abnormality, and stops the operation of the fuel cell system in the following cases: a case where the accessory device abnormality detector has detected an abnormality and the sensor abnormality detector has detected an abnormality; and a case where the accessory device abnormality detector detects no abnormality and the sensor abnormality detector has detected an abnormality.

Accordingly, if the sensor abnormality detector has detected an abnormality, the operation of the fuel cell system is stopped regardless of whether the accessory device abnormality detector has detected an abnormality. If the sensor abnormality detector detects no abnormality, the operation of the fuel cell system is continued regardless of whether the accessory device abnormality detector has detected an abnormality. The operation of the fuel cell system is continued even if an abnormality in the accessory device is detected, and therefore, excessively frequent operation stops can be reduced and a period during which the operation of the fuel cell system is continued can be extended.

The above object, other objects, features, and advantages of the present invention will be made clear by the following detailed description of preferred embodiments with reference to the accompanying drawings.

### Advantageous Effects of Invention

The fuel cell system and the method of operating the same according to the present invention are configured such that, for example, even if a temporary abnormality in an accessory device due to disturbance such as noise, wind, or dust is detected, the operation of the fuel cell system is continued until an abnormality in the operation state is detected based on an output value from a sensor. This makes it possible to reduce the frequency of operation stops due to abnormalities in accessory devices, and to extend a period during which the operation is continued.

### Brief Description of Drawings

[Fig. 1] Fig. 1 is a block diagram showing a schematic configuration of a fuel cell system according to Embodiment 1 of the present invention.
[Fig. 2] Fig. 2 is a flowchart showing an example of an abnormality detection operation performed by the fuel cell system according to Embodiment 1.
[Fig. 3] Fig. 3 is a block diagram showing a schematic configuration of a fuel cell system according to Embodiment 2 of the present invention.
[Fig. 4] Fig. 4 is a flowchart showing an example of an abnormality detection operation performed by the fuel cell system according to Embodiment 2.
[Fig. 5] Fig. 5 is a flowchart showing step S106A (step of determining by an association determiner and displaying by a display device) in the flowchart of Fig. 4 in more detail.
[Fig. 6] Fig. 6 is a table used for determining an association between an abnormality in an accessory device, which is detected by an accessory device abnormality detector, and an abnormality in the operation state of the fuel cell system, which is detected by a sensor abnormality detector.
[Fig. 7] Fig. 7 is a flowchart showing an example of an abnormality detection operation performed by a fuel cell system according to Embodiment 3.

### Description of Embodiments

Hereinafter, preferred embodiments of the present invention are described with reference to the drawings. In the drawings, the same or corresponding components are denoted by the same reference signs, and there are cases where repetition of the same description is avoided. In the drawings, components necessary for describing the present invention are shown, and the other components are omitted. Further, the present invention is not limited to the following embodiments.

### (Embodiment 1)

A fuel cell system according to Embodiment 1 of the present invention includes a fuel cell configured to generate electric power by using a fuel gas and an oxidizing gas. The fuel cell system includes: an accessory device which is at least one of an actuator and a heater, the actuator being configured to control a fluid relating to operation of the fuel cell system; a sensor configured to detect an operation state of the fuel cell system; an accessory device abnormality detector configured to detect an abnormality in the accessory device; a sensor abnormality detector configured to detect an abnormality in the operation state of the fuel cell system based on an output value from the sensor; and a controller configured to control the operation of the fuel cell system. The fuel cell system according to Embodiment 1 serves as an example where the controller performs control such that, during normal operation of the fuel cell system, the controller continues the operation of the fuel cell system in the following cases: a case where the accessory device abnormality detector has detected an abnormality and the sensor abnormality detector detects no abnormality; and a case where the accessory device abnormality detector detects no abnormality and the sensor abnormality detector detects no abnormality, and stops the operation of the fuel cell system in the following cases: a case where the accessory device abnormality detector has detected an abnormality and the sensor abnormality detector has detected an abnormality; and a case where the accessory device abnormality detector detects no abnormality and the sensor abnormality detector has detected an abnormality.

The "sensor configured to detect an operation state of the fuel cell system" herein refers to at least one of the following sensors: a flow rate sensor configured to detect the flow rate of a fluid flowing within the fuel cell system; a temperature sensor configured to detect a temperature; a pressure sensor configured to detect a pressure; a water level sensor configured to detect a water level; and a flame sensor configured to detect a combustion state of a burner.

The accessory device abnormality detector may be either included in the controller or provided separately from the controller. The accessory device abnormality detector is configured to send a signal to the controller when having detected an abnormality, the signal indicating the detection of the abnormality. Similarly, the sensor abnormality detector may be either included in the controller or provided separately from the controller. The sensor abnormality detector is configured to send a signal to the controller when having detected an abnormality, the signal indicating the detection of the abnormality.

Hereinafter, an example of the fuel cell system according to Embodiment 1 of the present invention is described with reference to the drawings.

### [Configuration of Fuel Cell System]

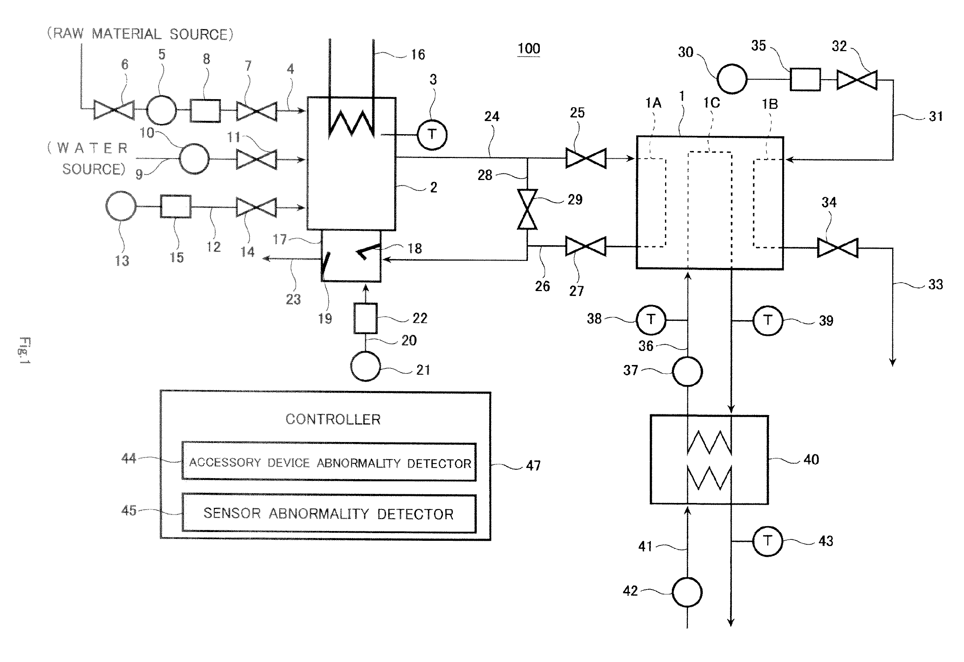

Fig. 1 is a block diagram showing a schematic configuration of the fuel cell system according to Embodiment 1 of the present invention.

As shown in Fig. 1, a fuel cell system 100 according to Embodiment 1 includes: a fuel cell 1; an accessory device which is at least one of an actuator and a heater, the actuator being configured to control a fluid relating to operation of the fuel cell system 100; a sensor configured to detect an operation state of the fuel cell system 100; an accessory device abnormality detector 44 configured to detect an abnormality in the accessory device; a sensor abnormality detector 45 configured to detect an abnormality in the operation state of the fuel cell system 100 based on an output value from the sensor; and a controller 47 configured to control the operation of the fuel cell system 100. The controller 47 is configured such that, during normal operation of the fuel cell system 100, the controller 47 continues the operation of the fuel cell system 100 in the following cases: a case where the accessory device abnormality detector 44 has detected an abnormality and the sensor abnormality detector 45 detects no abnormality; and a case where the accessory device abnormality detector 44 detects no abnormality and the sensor abnormality detector 45 detects no abnormality, and stops the operation of the fuel cell system 100 in the following cases: a case where the accessory device abnormality detector 44 has detected an abnormality and the sensor abnormality detector 45 has detected an abnormality; and a case where the accessory device abnormality detector 44 detects no abnormality and the sensor abnormality detector 45 has detected an abnormality.

Examples of the actuator configured to control the fluid relating to the operation of the fuel cell system 100 include a fan device such as a combustion fan 21 and a pump such as a cooling water pump 37. Examples of the heater include: a heater 16 configured to heat a hydrogen generator 2 when energized at start-up of the fuel cell system 100; a heater (not shown) configured to heat cooling water; and a heater (not shown) configured to heat hot water that exchanges heat with the cooling water.

Examples of the sensor configured to detect the operation state of the fuel cell system 100 include: a flow rate sensor such as a combustion air meter 22; a temperature sensor such as a first temperature detector 3; a pressure sensor (not shown) configured to detect pressure in a fuel gas passage 24, for example, at a position downstream from an on-off valve 25; a water level sensor (not shown) configured to detect a water level in a tank such as a cooling water tank (not shown) storing the cooling water; and a flame detector 19.

The hydrogen generator 2 includes a reformer, a shift converter, and a selective oxidizer (which are not shown). The hydrogen generator 2 includes a burner 17, to which a residual fuel gas passage 26, a combustion air passage 20, and a flue gas exhaust passage 23, which will be described below, are connected.

The burner 17 includes an igniter 18 and the flame detector 19. The igniter 18 is configured to cause ignition between a combustion fuel and air for the fuel, which are supplied to the burner 17. The flame detector 19 is configured to detect a flame that is generated by combustion in the burner 17, and to output to the controller 47 a notification that the flame has been detected. A frame rod or a thermocouple may be used as the flame detector 19. Alternatively, both a frame rod and a thermocouple may be used.

The combustion fan 21 and the combustion air meter 22 are provided at the combustion air passage 20. A fan device such as a sirocco fan may be used as the combustion fan 21. The combustion fan 21 is configured to supply combustion air to the burner 17 through the combustion air passage 20. The combustion air meter 22 is configured to detect the flow rate of the combustion air flowing through the combustion air passage 20, and to output the detected flow rate of the combustion air to the controller 47.

A fuel gas unused in the fuel cell 1 (hereinafter, referred to as a residual fuel gas), or a raw material unused in the fuel cell 1, is supplied to the burner 17 through the residual fuel gas passage 26 as a combustion fuel. In the burner 17, the combustion fuel and the combustion air are combusted, and thereby a flue gas is generated. The generated flue gas heats the reformer and the like of the hydrogen generator 2, and is then discharged to the outside of the fuel cell system 100 through the flue gas exhaust passage 23.

The hydrogen generator 2 is provided with the first temperature detector 3 and the heater 16. The first temperature detector 3 is configured to detect the temperature of a catalyst provided in the reformer or the like of the hydrogen generator 2, which will be described below, and to output the detected temperature to the controller 47. The heater 16 is an electric heater such as a sheathed heater, and is configured to heat the hydrogen generator 2 at start-up of the fuel cell system 100.

The downstream end of a raw material passage 4 is connected to the reformer of the hydrogen generator 2. The upstream end of the raw material passage 4 is connected to a raw material source (e.g., a natural gas infrastructure or a LPG canister). An on-off valve 6, a raw material pump 5, a raw material flowmeter 8, and an on-off valve 7 are provided along the raw material passage 4 in said order.

Various pumps such as a booster pump may be used as the raw material pump 5. The raw material pump 5 is configured to supply a raw material from the raw material source to the reformer of the hydrogen generator 2. A canister filled with the raw material, or a gas infrastructure line, may be used as the raw material source. A material usable as the raw material is one containing an organic compound of which the constituent elements are at least carbon and hydrogen. Examples of the material usable as the raw material include hydrocarbons such as methane, ethane, and propane. Natural gas or LP gas, which is a mixed gas containing the aforementioned organic compound and from which odorant components are removed, may be used the raw material.
Various valves such as solenoid valves may be used as the on-off valves 6 and 7. The on-off valves 6 and 7 are both configured to open/block a flow of the raw material within the raw material passage 4. The raw material flowmeter 8 is configured to detect the flow rate of the raw material flowing through the raw material passage 4, and to output the detected flow rate of the raw material to the controller 47.

The upstream end of a reforming water passage 9 is connected to the reformer of the hydrogen generator 2, and the downstream end of the reforming water passage 9 is connected to a water source. The water source may be a purifier configured to produce purified water, by using an ion exchange resin or the like, from externally-supplied water such as tap water or from recovered water that is internally produced and collected within the fuel cell system.

A reforming water pump 10 and an on-off valve 11 are provided along the reforming water passage 9. The reforming water pump 10 is configured to supply water for use in reforming from the water source to the reformer of the hydrogen generator 2. Various valves such as a solenoid valve may be used as the on-off valve 11. The on-off valve 11 is configured to open/block a flow of the water within the reforming water passage 9.

The reformer of the hydrogen generator 2 includes a reforming catalyst. In the reformer of the hydrogen generator 2, a hydrogen-containing gas (a reformed gas) is generated through a reforming reaction occurring between the raw material which is supplied from the raw material source and the water for use in reforming which is supplied from the water source. The generated reformed gas is supplied to the shift converter.

The shift converter of the hydrogen generator 2 includes a shift conversion catalyst. The shift converter removes, through a shift reaction, carbon monoxide from the preformed gas supplied from the reformer. The reformed gas from which carbon monoxide has been removed is supplied to the selective oxidizer.

The selective oxidizer of the hydrogen generator 2 includes a selective oxidation catalyst. A selective oxidation air passage 12 is connected to the selective oxidizer. An air pump 13, a selective oxidation air meter 15, and an on-off valve 14 are provided along the selective oxidation air passage 12 in said order. The air pump 13 is configured to supply oxygen (air) for use in selective oxidation to the selective oxidizer of the hydrogen generator 2 through the selective oxidation air passage 12. A fan device such as a sirocco fan may be used as the air pump 13. The selective oxidation air meter 15 is configured to detect the flow rate of air flowing through the selective oxidation air passage 12, and to output the detected flow rate of the air to the controller 47. Various valves such as a solenoid valve may be used as the on-off valve 14. The on-off valve 14 is configured to open/block a flow of the air within the selective oxidation air passage 12.

The selective oxidizer of the hydrogen generator 2 removes, through a selective oxidation reaction, carbon monoxide remaining in the reformed gas supplied from the shift converter. Then, the reformed gas from which carbon monoxide has been further removed is supplied to an anode passage 1A of the fuel cell 1 through the fuel gas passage 24 as a fuel gas (a reductant gas).

The upstream end of a fuel gas bypass passage 28 is connected to a middle portion of the fuel gas passage 24. The downstream end of the fuel gas bypass passage 28 is connected to a middle portion of the residual fuel gas passage 26. The fuel gas bypass passage 28 is used for supplying the fuel gas generated by the hydrogen generator 2 to the burner 17 in a manner to bypass the fuel cell 1, or for supplying, at the time of start-up of the fuel cell system 100, the fuel gas that contains insufficiently-reduced carbon monoxide to the burner 17 in a manner to bypass the fuel cell 1.

An on-off valve 29 is provided along the fuel gas bypass passage 28. Various valves such as a solenoid valve may be used as the on-off valve 29. The on-off valve 29 is configured to open/block a flow of gas such as the fuel gas within the fuel gas bypass passage 28.

Of the fuel gas passage 24, a passage downstream from a point where the fuel gas bypass passage 28 connects to the fuel gas passage 24 is provided with the on-off valve 25. Various valves such as a solenoid valve may be used as the on-off valve 25. The on-off valve 25 is configured to open/block a flow of gas such as the fuel gas within the fuel gas passage 24.

The residual fuel gas passage 26 connects the anode passage 1A of the fuel cell 1 and the burner 17, and is used for supplying the fuel gas that is unused in the fuel cell 1 to the burner 17. Of the residual fuel gas passage 26, a passage upstream from a point where the fuel gas bypass passage 28 connects to the residual fuel gas passage 26 is provided with an on-off valve 27. Various valves such as a solenoid valve may be used as the on-off valve 27. The on-off valve 27 is configured to open/block a flow of gas such as the residual fuel gas within the residual fuel gas passage 26.

A blower 30 is connected to a cathode passage 1B of the fuel cell 1 via an air passage 31. A fan device such as a blower or a sirocco fan may be used as the blower 30. The blower 30 is configured to supply an oxidizing gas (air) to the cathode passage 1B.

An on-off valve 32 and an air meter 35 are provided along the air passage 31. Various valves such as a solenoid valve may be used as the on-off valve 32. The on-off valve 32 is configured to open/block a flow of the oxidizing gas within the air passage 31. The air meter 35 is configured to detect the flow rate of the oxidizing gas flowing through the air passage 31, and to output the detected flow rate of the oxidizing gas to the controller 47.

A residual air passage 33 is connected to the downstream end of the cathode passage 1B of the fuel cell 1. The residual air passage 33 is used for discharging the oxidizing gas that is unused in the fuel cell 1 (hereinafter, referred to as residual oxidizing gas) to the outside of the fuel cell system 100. An on-offvalve 34 is provided along the residual air passage 33. Various valves such as a solenoid valve may be used as the on-off valve 34. The on-off valve 34 is configured to open/block a flow of gas such as the residual oxidizing gas within the residual air passage 33.

The fuel cell 1 includes an anode and a cathode (which are not shown). The fuel gas is supplied to the anode through the anode passage 1A. The oxidizing gas is supplied to the cathode through the cathode passage 1B. In the fuel cell 1, the fuel gas supplied to the anode and the oxidizing gas supplied to the cathode electrochemically react with each other, and thereby electricity and heat are generated. The electric power generated by the fuel cell 1 is converted by a power converter (not shown) from DC power into AC power, and also, the voltage of the electric power is adjusted. Then, the resultant electric power is supplied to electrical loads such as lights and various electrical appliances.

It should be noted that various fuel cells, for example, a solid polymer fuel cell, a phosphoric-acid fuel cell, or a solid oxide fuel cell, may be used as the fuel cell 1. Since the fuel cell 1 is configured in the same manner as that of a general fuel cell, a detailed description of the fuel cell 1 is omitted.

The fuel cell 1 includes a cooling water passage 1C through which cooling water flows. The cooling water serves to recover generated heat and cool down the fuel cell 1. A cooling water passage 36 is connected to the cooling water passage 1C. The cooling water passage 36 is also connected to a primary passage of a heat exchanger 40. The cooling water pump 37 is provided along the cooling water passage 36. The cooling water pump 37 is configured to cause the cooling water to circulate within the cooling water passage 1C, the cooling water passage 36, and the primary passage of the heat exchanger 40.

A second temperature detector 38 configured to detect the temperature of the cooling water that is supplied to the fuel cell 1, and a third temperature detector 39 configured to detect the temperature of the cooling water that is discharged from the fuel cell 1, are provided along the cooling water passage 36. The second temperature detector 38 and the third temperature detector 39 are both configured to output the detected temperature of the cooling water to the controller 47.

An exhaust heat recovery water passage 41 is connected to a secondary passage of the heat exchanger 40. At the heat exchanger 40, high-temperature cooling water that has recovered the heat generated by the fuel cell 1, and hot water flowing through the exhaust heat recovery water passage 41, exchange heat with each other. The high-temperature cooling water is cooled down at the heat exchanger 40, and is supplied to the cooling water passage 1C again.

A hot water pump 42 is provided along the exhaust heat recovery water passage 41. The hot water pump 42 is configured to cause the hot water in the exhaust heat recovery water passage 41 to flow therein. A fourth temperature detector 43, which is configured to detect the temperature of the hot water that has exchanged heat (i.e., that has been heated) at the heat exchanger 40, is provided along the exhaust heat recovery water passage 41. The fourth temperature detector 43 is configured to output the detected temperature to the controller 47.

It should be noted that the hot water that has recovered heat by exchanging heat with the cooling water via the heat exchanger 40 may be stored in a hot water tank (not shown) or the like. By adopting such a configuration, the hot water can be utilized from the hot water tank when necessary.

The controller 47 includes the accessory device abnormality detector 44 and the sensor abnormality detector 45. The controller 47 may be configured as any device, so long as the device is configured to control component devices of the fuel cell system 100. The controller 47 includes: an arithmetic processing unit exemplified by a microprocessor, CPU, or the like; a storage unit configured as, for example, a memory storing programs for executing control operations; and a clock unit.

The controller 47 performs various controls of the fuel cell system 100 through the loading and execution, by the arithmetic processing unit, of a predetermined control program stored in the storage unit. Further, the accessory device abnormality detector 44 and the sensor abnormality detector 45 are realized through the execution, by the controller 47, of a predetermined program stored in the storage unit.

Specifically, rotational frequency signals from the combustion fan 21, the cooling water pump 37, the hot water pump 42, and the like are inputted to the controller 47 (the accessory device abnormality detector 44), and thereby it is monitored whether there is an abnormality in any of these actuators. At the time when the heater 16 is energized, a feedback pulse fed back from a heater control board which is not shown is inputted to the controller 47 (the accessory device abnormality detector 44), and thereby it is monitored whether there is an abnormality in the heater 16. Further, output signals from the sensors such as the flame detector 19, the combustion air meter 22, and the first temperature detector 3 are inputted to the controller 47 (the sensor abnormality detector 45), and thereby it is monitored whether there is an abnormality in the operation state of the fuel cell system 100.

It should be noted that the controller 47 may be configured not only as a single controller, but as a group of multiple controllers which operate in cooperation with each other to control the fuel cell system 100. Moreover, the controller 47 may be configured as a microcontroller. Furthermore, the controller 47 may be configured as an MPU, PLC (Programmable Logic Controller), logic circuit, or the like.

Although in Embodiment 1 the hydrogen generator 2 includes a shift converter and a selective oxidizer, the present embodiment is not limited to this. As an alternative, at least one of the shift converter and the selective oxidizer may be eliminated from the hydrogen generator 2.

### [Operation of Fuel Cell System]

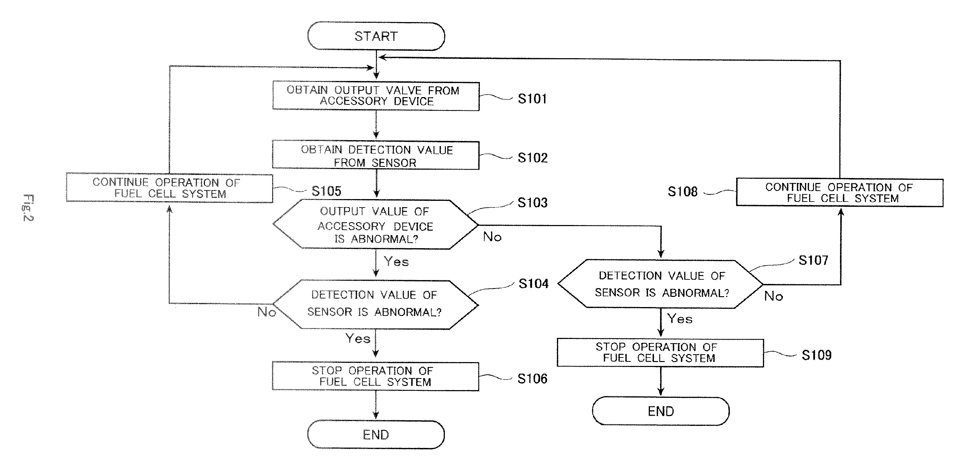

Next, the operation of the fuel cell system 100 according to Embodiment 1 is described with reference to Fig. 2. It should be noted that a start-up operation, a power generation operation, and a stop operation of the fuel cell system 100, as well as operations performed when the fuel cell system 100 remains idle, are the same as those of a general fuel cell system. Therefore, a description of such operations will be omitted.

Fig. 2 is a flowchart showing an example of an abnormality detection operation performed by the fuel cell system according to Embodiment 1. It should be noted that the operation described below is performed when the start-up operation (start-up step) and the power generation operation (power generation step) of the fuel cell system 100 are performed.

As shown in Fig. 2, first, the controller 47 (the accessory device abnormality detector 44) obtains an output value from an accessory device (step S 101). Specifically, for example, when the combustion fan 21 is in operation, the controller 47 (the accessory device abnormality detector 44) obtains a rotational frequency signal outputted from the combustion fan 21. Then, the controller 47 (the sensor abnormality detector 45) obtains, from a sensor, a detection value detected by the sensor (step S 102). Specifically, as one example, the controller 47 (the sensor abnormality detector 45) obtains, from the combustion air meter 22, a combustion air flow rate detected by the combustion air meter 22. As another example, the controller 47 (the sensor abnormality detector 45) obtains a combustion state of the burner 17 from the flame detector 19.

Next, the controller 47 (the accessory device abnormality detector 44) determines whether the output value obtained from the accessory device in step S101 is abnormal (step S 103). If the output value obtained from the accessory device in step S101 is not abnormal (i.e., normal) (No in step S103), the controller 47 (the accessory device abnormality detector 44) advances the flow to step S 107. On the other hand, if the output value obtained from the accessory device in step S101 is abnormal (Yes in step S103), the controller 47 (the accessory device abnormality detector 44) advances the flow to step S104. Operations in step S 107 and thereafter will be described later below.

In step S 104, the controller 47 (the sensor abnormality detector 45) determines whether the detection value obtained from the sensor in step S102 is abnormal. If the detection value obtained from the sensor in step S 102 is not abnormal (i.e., normal) (No in step S 104), the controller 47 (the sensor abnormality detector 45) continues the operation of the fuel cell system 100 (step S105) and returns the flow to step S 10 1.

Here, cases where the output value obtained from the accessory device in step S101 is abnormal and the detection value obtained from the sensor in step S 102 is not abnormal (i.e., normal) include, for example, the following cases: a case where no rotational frequency signal from the combustion fan 21 is inputted to the controller 47 but the combustion air meter 22 has detected a combustion air flow rate and/or the flame detector 19 has detected that the burner 17 is in a state of combustion; and a case where only the rotational frequency signal outputted from the combustion fan 21 is abnormal due to disturbance such as noise while the combustion air meter 22 has detected a combustion air flow rate and/or the flame detector 19 has detected that the burner 17 is in a state of combustion. In these cases, it can be determined that the combustion fan 21 is in operation. Accordingly, the controller 47 continues the operation of the fuel cell system 100.

On the other hand, if the detection value obtained from the sensor in step S 102 is abnormal (Yes in step S104), the controller 47 (the sensor abnormality detector 45) stops the operation of the fuel cell system 100 (step S 106) and ends the operation flow.

Here, cases where the output value obtained from the accessory device in step S101 is abnormal and the detection value obtained from the sensor in step S 102 is abnormal include, for example, a case where the rotational frequency signal outputted from the combustion fan 21 is out of a predetermined range and the combustion air meter 22 has not detected a combustion air flow rate. In such a case, since there are abnormalities in the accessory device and the sensor, the controller 47 stops the operation of the fuel cell system 100.

As mentioned above, if the output value obtained from the accessory device in step S 101 is not abnormal (i.e., normal) (No in step S 103), the controller 47 (the accessory device abnormality detector 44) advances the flow to step S 107. In step S 107, the controller 47 (the sensor abnormality detector 45) determines whether the detection value obtained from the sensor in step S 102 is abnormal.

If the detection value obtained from the sensor in step S102 is not abnormal (i.e., normal) (No in step S107), the controller 47 (the sensor abnormality detector 45) continues the operation of the fuel cell system 100 (step S 108) and returns the flow to step S 10 1.

Here, cases where the output value obtained from the accessory device in step S101 is not abnormal (i.e., normal) and the detection value obtained from the sensor in step S102 is not abnormal (i.e., normal) include, for example, a case where when the controller 47 is performing feedback control of the combustion fan 21 based on the flow rate detected by the combustion air meter 22, the rotational frequency signal outputted from the combustion fan 21 and the flow rate detected by the combustion air meter 22 correspond to each other. In such a case, both the accessory device and the sensor are in a normal state. Therefore, the controller 47 continues the operation of the fuel cell system 100.

On the other hand, if the detection value obtained from the sensor in step S 102 is abnormal (Yes in step S 107), the controller 47 (the sensor abnormality detector 45) stops the operation of the fuel cell system 100 (step S 109) and ends the operation flow.

Cases where the output value obtained from the accessory device in step S101 is not abnormal (i.e., normal) and the detection value obtained from the sensor in step S 102 is abnormal include, for example, a case where the rotational frequency signal from the combustion fan 21 has been inputted to the controller 47 but the combustion air meter 22 has not detected a combustion air flow rate and/or the flame detector 19 has detected flame extinction of the burner 17. In such a case, the controller 47 stops the operation of the fuel cell system 100.

The fuel cell system 100 according to Embodiment 1 is configured as described above such that if the sensor abnormality detector 45 has detected an abnormality, the operation of the fuel cell system 100 is stopped regardless of whether the accessory device abnormality detector 44 has detected an abnormality, and if the sensor abnormality detector 45 detects no abnormality, the operation of the fuel cell system 100 is continued regardless of whether the accessory device abnormality detector 44 has detected an abnormality.

Accordingly, in the fuel cell system 100 according to Embodiment 1, the frequency of operation stops due to abnormalities in accessory devices is reduced, and thereby the number of times of giving unnecessary abnormality detection notifications and the number of times of performing unnecessary operation stops of the fuel cell system 100 are reduced, which makes it possible to reduce the number of times of performing maintenance work. Thus, the fuel cell system 100 according to Embodiment 1 realizes improved usability for the user.

### (Embodiment 2)

A fuel cell system according to Embodiment 2 of the present invention further includes: a display device configured to display the operation state of the fuel cell system; and an association determiner configured to determine, when both the accessory device abnormality detector and the sensor abnormality detector have detected the respective abnormalities, an association between the abnormality in the accessory device and the abnormality in the operation state. The fuel cell system according to Embodiment 2 serves as an example where when the controller is to stop the operation of the fuel cell system in a case where both the accessory device abnormality detector and the sensor abnormality detector have detected the respective abnormalities, the controller causes the display device to show a display indicating that both the accessory device and the sensor are in an abnormal state if the association determiner has determined that the abnormalities are associated with each other, and causes the display device to show a display indicating that only the sensor is in an abnormal state if the association determiner has determined that the abnormalities are not associated with each other.

In the fuel cell system according to Embodiment 2, the controller may store: a first display code indicating the abnormality in the accessory device, the abnormality being detected by the accessory device abnormality detector; and a second display code indicating the abnormality in the operation state of the fuel cell system, the abnormality being detected by the sensor abnormality detector, and the display shown by the display device and indicating that both the accessory device and the sensor are in an abnormal state may show both the first display code and the second display code.

### [Configuration of Fuel Cell System]

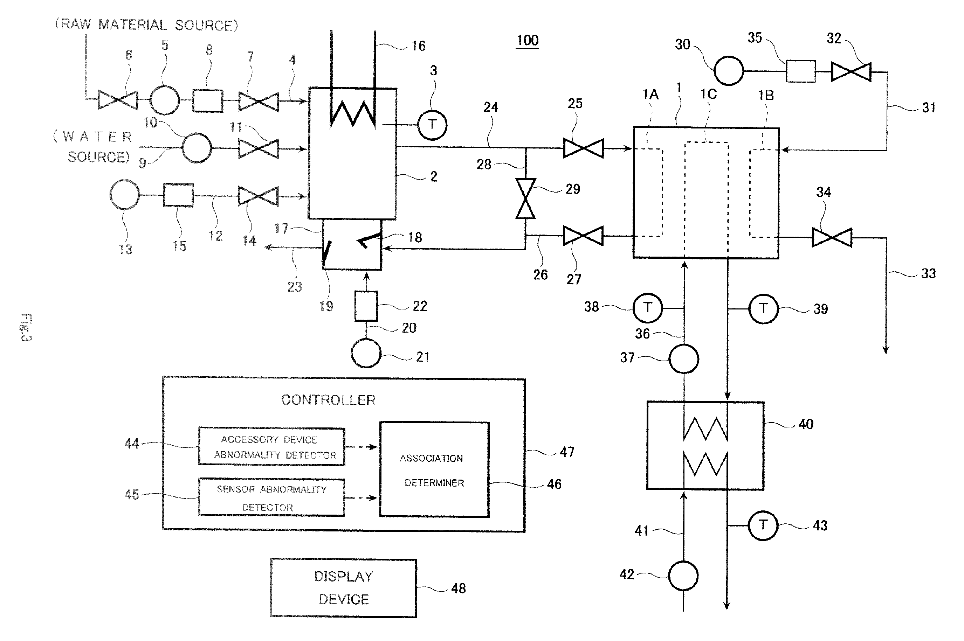

Fig. 3 is a block diagram showing a schematic configuration of the fuel cell system according to Embodiment 2 of the present invention.

As shown in Fig. 3, the fundamental configuration of the fuel cell system 100 according to Embodiment 2 is the same as that of the fuel cell system 100 according to Embodiment 1, except that the fuel cell system 100 according to Embodiment 2 includes a display device 48 and the controller 47 of the fuel cell system 100 according to Embodiment 2 includes an association determiner 46. It should be noted that the association determiner 46 is realized when the controller 47 executes a predetermined program stored in the storage unit.

The display device 48 may be configured in any form, so long as the display device 48 is configured to display information (character data, image data, etc.) outputted from the controller 47. For example, a remote controller, mobile phone, smartphone, or a tablet computer may be used as the display device 48. The display device 48 may include operating units such as switches and a display unit such as an LCD screen.

The display device 48 is configured to display the operation state of the fuel cell system (e.g., stopped, starting up, generating electric power, etc.). Also, the display device 48 is configured to display, when both the accessory device abnormality detector 44 and the sensor abnormality detector 45 have detected respective abnormalities, a state of abnormality in accordance with a determination made by the association determiner 46 which is configured to determine an association between an abnormality in an accessory device and an abnormality in the operation state of the fuel cell system.

The storage unit, which is not shown, of the controller 47 stores: a first display code indicating an abnormality in an accessory device, the abnormality being detected by the accessory device abnormality detector 44; and a second display code indicating an abnormality in the operation state of the fuel cell system 100, the abnormality being detected by the sensor abnormality detector 45. The first display code is, for example, "001" which is an error code indicating an abnormality in the combustion fan 21, and the second display code is, for example, "101" which is an error code indicating flame extinction.

### [Operation of Fuel Cell System]

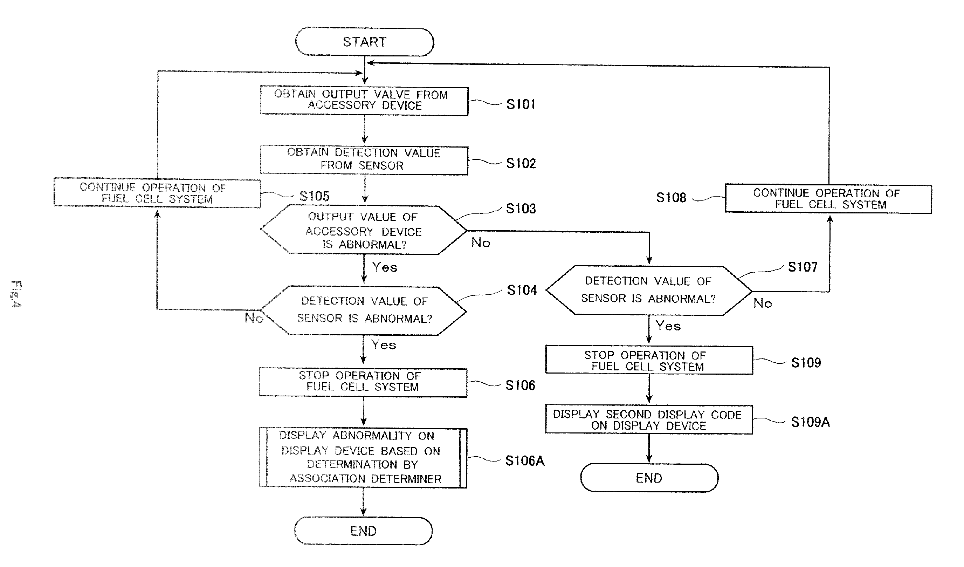

Next, the operation of the fuel cell system 100 according to Embodiment 2 is described with reference to Fig. 4 to Fig. 6.

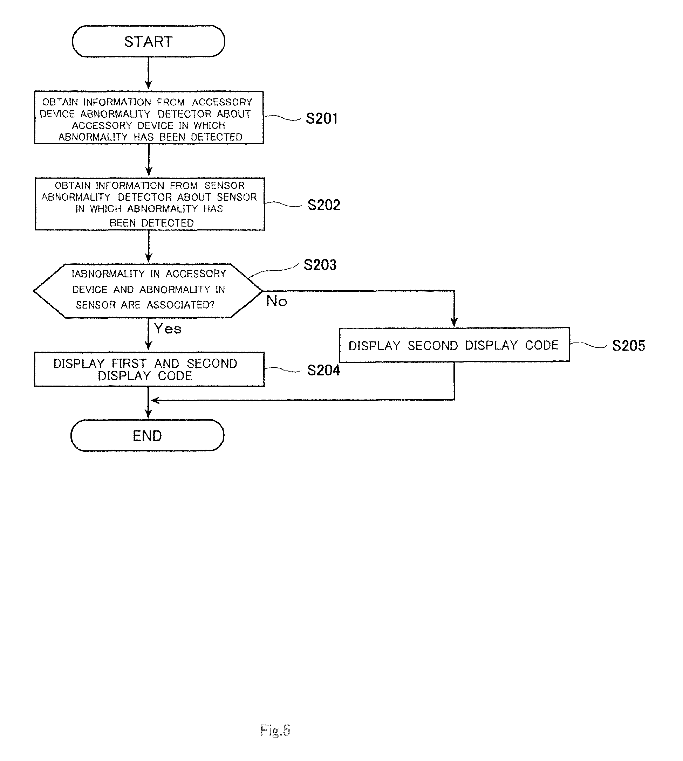

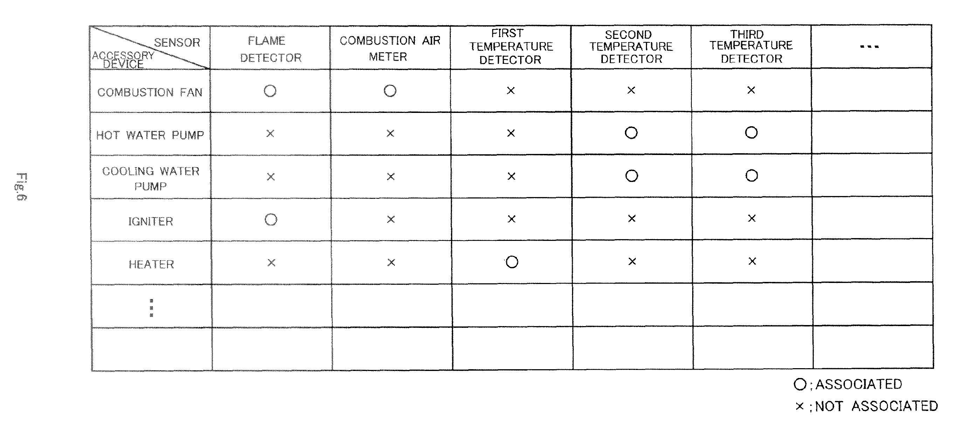

Fig. 4 is a flowchart showing an example of an abnormality detection operation performed by the fuel cell system according to Embodiment 2. Fig. 5 is a flowchart showing step S 106A (step of determining by the association determiner and displaying by the display device) in the flowchart of Fig. 4 in more detail. Fig. 6 is a table used for determining an association between an abnormality in an accessory device, which is detected by the accessory device abnormality detector, and an abnormality in the operation state of the fuel cell system, which is detected by the sensor abnormality detector.

As shown in Fig. 4, the abnormality detection operation performed by the fuel cell system 100 according to Embodiment 2 is fundamentally the same as the abnormality detection operation performed by the fuel cell system 100 according to Embodiment 1 except that, in the fuel cell system 100 according to Embodiment 2, step S 1 06A is performed after step S 106 and step S 106A is performed after step S 106. Hereinafter, step S 106A and step S109A are described.

First, step S 109A is described.

If the output value of the accessory device is not abnormal (No in step S 103) and the detection value of the sensor is abnormal (Yes in step S107), the controller 47 stops the operation of the fuel cell system 100 (step S 109). That is, the accessory device abnormality detector 44 is in a state of not detecting an abnormality and only the sensor abnormality detector 45 is in a state of detecting an abnormality. In this case, the controller 47 causes the display device 48 to display the second display code indicating an abnormality in the operation state of the fuel cell system 100, the abnormality being detected by the sensor abnormality detector 45 (step S 109A). Specifically, for example, the controller 47 causes the display device 48 to display the second display code "101" if there is an abnormality in the flame detector 19 which is the sensor.

Next, step S 106A is described.

If the output value of the accessory device is abnormal (Yes in step S 103) and the detection value of the sensor is abnormal (Yes in step S107), the controller 47 stops the operation of the fuel cell system 100 (step S 106). That is, both the accessory device abnormality detector 44 and the sensor abnormality detector 45 are in a state of detecting an abnormality. In this case, the controller 47 causes the display device 48 to display an abnormality (abnormalities) based on a determination made by the association determiner 46 (step S106A).

Hereinafter, step S 106A is described in more detail with reference to Fig. 5 and Fig. 6.

As shown in Fig. 5, the controller 47 (the association determiner 46) obtains information about the accessory device in which the accessory device abnormality detector 44 has detected an abnormality (step S201). Specifically, as one example, the controller 47 (the association determiner 46) obtains, from the accessory device abnormality detector 44, information that there is an abnormality in the combustion fan 21. As another example, the controller 47 (the association determiner 46) obtains, from the accessory device abnormality detector 44, information that there is an abnormality in the hot water pump 42.

Next, the controller 47 (the association determiner 46) obtains information about the sensor in which the sensor abnormality detector 45 has detected an abnormality (step S202). For example, the controller 47 (the association determiner 46) obtains, from the sensor abnormality detector 45, information that there is an abnormality in the flame detector 19.

Next, the controller 47 (the association determiner 46) refers to the table in Fig. 6 to determine whether the abnormality in the accessory device obtained in step S201 and the abnormality in the sensor obtained in step S202 are associated with each other (step S203).

If the abnormality in the accessory device obtained in step S201 and the abnormality in the sensor obtained in step S202 are associated with each other (Yes in step S203), then the controller 47 (the association determiner 46) causes the display device 48 to display the first display code and the second display code (step S204) and ends the operation flow.

Specifically, for example, if there are abnormalities in the combustion fan 21 and the flame detector 19, the controller 47 (the association determiner 46) determines with reference to the table in Fig. 6 that these abnormalities are associated with each other (Yes in step S203), and causes the display device 48 to display the first display code "001" and the second display code "101" (step S204).

On the other hand, if the abnormality in the accessory device obtained in step S201 and the abnormality in the sensor obtained in step S202 are not associated with each other (No in step S203), the controller 47 (the association determiner 46) causes the display device 48 to display the second display code (step S205) and ends the operation flow.

Specifically, for example, if there are abnormalities in the hot water pump 42 and the flame detector 19, the controller 47 (the association determiner 46) determines with reference to the table in Fig. 6 that these abnormalities are not associated with each other (No in step S203) and causes the display device 48 to display the second display code "101" (step S205).

The fuel cell system 100 according to Embodiment 2 with the above-described configuration provides the same operational advantages as those of the fuel cell system 100 according to Embodiment 1. Moreover, in the fuel cell system 100 according to Embodiment 2, the second display code is displayed on the display device 48 if an abnormality in an accessory device and an abnormality in a sensor are not associated with each other, and the first display code and the second display code are displayed on the display device 48 if an abnormality in an accessory device and an abnormality in a sensor are associated with each other. This allows a maintenance worker to readily specify a component to be replaced in maintenance work. This makes it possible to reduce a repairing time.

In particular, for example, displaying the first display code ("001") and the second display code ("101") on the display device 48 allows a maintenance worker to readily specify a component to be replaced (e.g., the combustion fan 21). This makes it possible to reduce a repairing time.

### (Embodiment 3)

A fuel cell system according to Embodiment 3 of the present invention serves as an example where the controller performs control such that, during trial operation of the fuel cell system, the controller continues the operation of the fuel cell system in a case where the accessory device abnormality detector detects no abnormality and the sensor abnormality detector detects no abnormality, and stops the operation of the fuel cell system in at least one of the following cases: a case where the accessory device abnormality detector has detected an abnormality; and a case where the sensor abnormality detector has detected an abnormality.

Since the configuration of the fuel cell system 100 according to Embodiment 3 of the present invention is the same as that of the fuel cell system 100 according to Embodiment 1, the description of the configuration of the fuel cell system 100 according to Embodiment 3 is omitted. It should be noted that the configuration of the fuel cell system 100 according to Embodiment 3 of the present invention may be the same as the configuration of the fuel cell system 100 according to Embodiment 2.

### [Operation of Fuel Cell System]

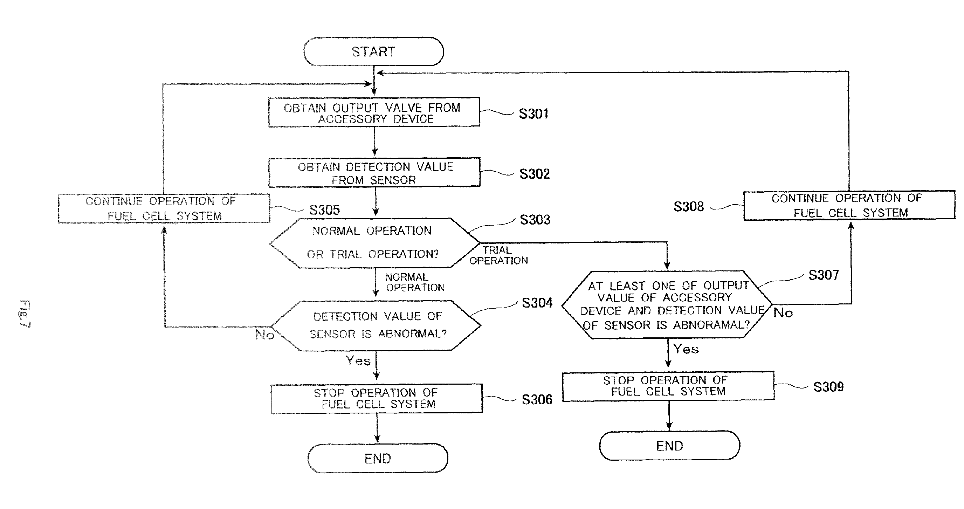

Fig. 7 is a flowchart showing an example of an abnormality detection operation performed by the fuel cell system according to Embodiment 3.

As shown in Fig. 7, first, the controller 47 (the accessory device abnormality detector 44) obtains an output value from an accessory device (step S301). Next, the controller 47 (the sensor abnormality detector 45) obtains, from a sensor, a detection value detected by the sensor (step S302).

Next, the controller 47 determines whether the fuel cell system 100 is perfoming normal operation or trial operation (step S303). The trial operation herein refers to the operation of the fuel cell system 100 that is performed when the fuel cell system 100 is installed or when maintenance is performed on the fuel cell system 100 (i.e., a start-up step (start-up process), a power generation step (power generation process), and a stop step (stop process)). It should be noted that the power generation step need not be performed when the fuel cell system 100 is performing the trial operation.

The controller 47 advances the flow to step S307 if the fuel cell system 100 is performing the trial operation, and advances the flow to step S304 if the fuel cell system 100 is performing the normal operation. Operations performed in step S307 and thereafter will be described later below.

In step S304, the controller 47 (the sensor abnormality detector 45) determines whether the detection value obtained from the sensor in step S302 is abnormal. If the detection value obtained from the sensor in step S302 is not abnormal (i.e., normal) (No in step S304), the controller 47 (the sensor abnormality detector 45) continues the operation of the fuel cell system 100 (step S305) and returns the flow to step S301.

On the other hand, if the detection value obtained from the sensor in step S302 is abnormal (Yes in step S304), the controller 47 (the sensor abnormality detector 45) stops the operation of the fuel cell system 100 (step S306) and ends the operation flow.

As mentioned above, if it is determined in step S303 that the fuel cell system 100 is performing the trial operation, the controller 47 advances the flow to step S307. In step S307, the controller 47 (the accessory device abnormality detector 44 and the sensor abnormality detector 45) determines whether at least one of the output value obtained from the accessory device in step S301 and the detection value obtained from the sensor in step S302 is abnormal.

If the output value obtained from the accessory device in step S301 is not abnormal (i.e., normal) and the detection value obtained from the sensor in step S302 is not abnormal (i.e., normal) (No in step S307), the controller 47 (the accessory device abnormality detector 44 and the sensor abnormality detector 45) continues the operation of the fuel cell system 100 (step S308) and returns the flow to step S301.

On the other hand, if at least one of the output value obtained from the accessory device in step S301 and the detection value obtained from the sensor in step S302 is abnormal (Yes in step S307), the controller 47 (the sensor abnormality detector 45) stops the operation of the fuel cell system 100 (step S309) and ends the operation flow.

In a case where the fuel cell system 100 is performing the trial operation, the trial operation of the fuel cell system 100 is run by a maintenance worker. Accordingly, during the trial operation, if there is an accessory device abnormality that does not cause an operation stop in the case of performing the normal operation of the fuel cell system 100, the operation (trial operation) of the fuel cell system 100 can be stopped and the accessory device abnormality can be confirmed. In this manner, maintenance can be performed more assuredly.

The fuel cell system 100 according to Embodiment 3 with the above-described configuration provides the same operational advantages as those of the fuel cell system 100 according to Embodiment 1. According to the fuel cell system 100 of Embodiment 3, if there is an abnormality in an accessory device during the trial operation of the fuel cell system 100, the operation (the trial operation) of the fuel cell system 100 can be stopped and the abnormality can be confirmed. In this manner, maintenance can be performed more assuredly.

It should be noted that, as in the fuel cell system 100 according to Embodiment 2, the abnormality may be displayed on the display device 48 in the case of stopping the operation of the fuel cell system 100.

From the foregoing description, numerous modifications and other embodiments of the present invention are obvious to one skilled in the art. Therefore, the foregoing description should be interpreted only as an example and is provided for the purpose of teaching the best mode for carrying out the present invention to one skilled in the art. The configurations and/or functional details may be substantially altered without departing from the spirit of the present invention. In addition, various inventions can be made by suitable combinations of a plurality of components disclosed in the above embodiments.

### Industrial Applicability

The fuel cell system and the method of operating the same according to the present invention are useful in the technical field of fuel cells since they are capable of reducing the frequency of operation stops due to abnormalities in accessory devices and extending a period during which the operation is continued.

### Reference Signs List

| | |
|---|---|
| 1 | fuel cell |
| 1A | anode passage |
| 1B | cathode passage |
| 1C | cooling water passage |
| 2 | hydrogen generator |
| 3 | first temperature detector |
| 4 | raw material passage |
| 5 | raw material pump |
| 6 | on-off valve |
| 7 | on-off valve |
| 8 | raw material flowmeter |
| 9 | reforming water passage |
| 10 | reforming water pump |
| 11 | on-off valve |
| 12 | selective oxidation air passage |
| 13 | air pump |
| 14 | on-off valve |
| 15 | selective oxidation air meter |
| 16 | heater |
| 17 | burner |
| 18 | igniter |
| 19 | flame detector |
| 20 | combustion air passage |
| 21 | combustion fan |
| 22 | combustion air meter |
| 23 | flue gas exhaust passage |
| 24 | fuel gas passage |
| 25 | on-off valve |
| 26 | residual fuel gas passage |
| 27 | on-off valve |
| 28 | fuel gas bypass passage |
| 29 | on-off valve |
| 30 | blower |
| 31 | air passage |
| 32 | on-off valve |
| 33 | residual air passage |
| 34 | on-off valve |
| 35 | air meter |
| 36 | cooling water passage |
| 37 | cooling water pump |
| 38 | second temperature detector |
| 39 | third temperature detector |
| 40 | heat exchanger |
| 41 | exhaust heat recovery water passage |
| 42 | hot water pump |
| 43 | fourth temperature detector |
| 44 | accessory device abnormality detector |
| 45 | sensor abnormality detector |
| 46 | association determiner |
| 47 | controller |
| 48 | display device |
| 100 | fuel cell system |

## Claims

1. A fuel cell system including a fuel cell configured to generate electric power by using a fuel gas and an oxidizing gas, the fuel cell system comprising:
an accessory device which is at least one of an actuator and a heater, the actuator being configured to control a fluid relating to operation of the fuel cell system;
a sensor configured to detect an operation state of the fuel cell system;
an accessory device abnormality detector configured to detect an abnormality in the accessory device;
a sensor abnormality detector configured to detect an abnormality in the operation state of the fuel cell system based on an output value from the sensor; and
a controller configured to control the operation of the fuel cell system, wherein
the controller performs control such that,
during normal operation of the fuel cell system, the controller
continues the operation of the fuel cell system in the following cases: a case where the accessory device abnormality detector has detected an abnormality and the sensor abnormality detector detects no abnormality; and a case where the accessory device abnormality detector detects no abnormality and the sensor abnormality detector detects no abnormality, and
stops the operation of the fuel cell system in the following cases: a case where the accessory device abnormality detector has detected an abnormality and the sensor abnormality detector has detected an abnormality; and a case where the accessory device abnormality detector detects no abnormality and the sensor abnormality detector has detected an abnormality.

2. The fuel cell system according to claim 1, further comprising:
a display device configured to display the operation state of the fuel cell system; and
an association determiner configured to determine, when both the accessory device abnormality detector and the sensor abnormality detector have detected the respective abnormalities, an association between the abnormality in the accessory device and the abnormality in the operation state, wherein
when the controller is to stop the operation of the fuel cell system in a case where both the accessory device abnormality detector and the sensor abnormality detector have detected the respective abnormalities,
the controller
causes the display device to show a display indicating that both the accessory device and the sensor are in an abnormal state if the association determiner has determined that the abnormalities are associated with each other, and
causes the display device to show a display indicating that only the sensor is in an abnormal state if the association determiner has determined that the abnormalities are not associated with each other.

3. The fuel cell system according to claim 2, wherein
the controller stores:
a first display code indicating the abnormality in the accessory device, the abnormality being detected by the accessory device abnormality detector; and
a second display code indicating the abnormality in the operation state of the fuel cell system, the abnormality being detected by the sensor abnormality detector, and
the display shown by the display device and indicating that both the accessory device and the sensor are in an abnormal state shows both the first display code and the second display code.

4. The fuel cell system according to any one of claims 1 to 3, wherein
the controller performs control such that,
during trial operation of the fuel cell system, the controller
continues the operation of the fuel cell system in a case where the accessory device abnormality detector detects no abnormality and the sensor abnormality detector detects no abnormality, and
stops the operation of the fuel cell system in at least one of the following cases: a case where the accessory device abnormality detector has detected an abnormality; and a case where the sensor abnormality detector has detected an abnormality.

5. A method of operating a fuel cell system including a fuel cell configured to generate electric power by using a fuel gas and an oxidizing gas, the method comprising the steps of:
(A) detecting whether there is occurring an abnormality in an accessory device which is at least one of an actuator and a heater, the actuator being configured to control a fluid relating to operation of the fuel cell system;
(B) detecting, based on an output value from a sensor configured to detect an operation state of the fuel cell system, whether there is occurring an abnormality in the operation state of the fuel cell system;
(C) continuing the operation of the fuel cell system in a case where an abnormality is detected in the step (A) and no abnormality is detected in the step (B) during normal operation of the fuel cell system, and in a case where no abnormality is detected in the step (A) and no abnormality is detected in the step (B) during the normal operation of the fuel cell system; and
(D) stopping the operation of the fuel cell system in a case where an abnormality is detected in the step (A) and an abnormality is detected in the step (B) during the normal operation of the fuel cell system, and in a case where no abnormality is detected in the step (A) and an abnormality is detected in the step (B) during the normal operation of the fuel cell system.

6. The method of operating the fuel cell system according to claim 5, further comprising the steps of:
(E) determining, when the respective abnormalities are detected in both the step (A) and the step (B), an association between the abnormality in the accessory device and the abnormality in the operation state;
(F) showing, by a display device, a display indicating that both the accessory device and the sensor are in an abnormal state if it is determined in the step (E) that the abnormalities are associated with each other; and
(G) showing, by the display device, a display indicating that only the sensor is in an abnormal state if it is determined in the step (E) that the abnormalities are not associated with each other.

7. The method of operating the fuel cell system according to claim 6, wherein
the display shown by the display device and indicating that both the accessory device and the sensor are in an abnormal state shows both a first display code and a second display code, the first display code indicating the abnormality in the accessory device, the abnormality being detected by the accessory device abnormality detector, the second display code indicating the abnormality in the operation state of the fuel cell system, the abnormality being detected by the sensor abnormality detector.

8. The method of operating the fuel cell system according to any one of claims 5 to 7, further comprising the steps of:
(H) continuing the operation of the fuel cell system in a case where no abnormality is detected in the step (A) and no abnormality is detected in the step (B) during trial operation of the fuel cell system; and
(I) stopping the operation of the fuel cell system in at least one of
a case where an abnormality is detected in the step (A) during the trial operation of the fuel cell system and
a case where an abnormality is detected in the step (B) during the trial operation of the fuel cell system.
